# FASCICULE DE BREVET EUROPEEN

(11) **EP 3 870 441 B1**
(45) Date de publication et mention de la délivrance du brevet: **07.12.2022**
(21) Numéro de dépôt: 19787303.7
(22) Date de dépôt: 22.10.2019
(51) Int. Cl.: B32B 17/10, F41H 5/04

(54) **VITRAGE DE SÉCURITÉ**
SICHERHEITSVERGLASUNG
SAFETY GLAZING

(30) Priorité: 23.10.2018 EP 18202087
(43) Date de publication de la demande: 01.09.2021
(73) Titulaire: AGC Glass Europe, 6041 Gosselies (BE)
(72) Inventeur: LESCOT, Thomas, 6210 Reves (BE); DELLIEU, Louis, 5310 Waret-La-Chaussée (BE); MATHY, Bertrand, 6041 Gosselies (BE)
(74) Mandataire: AGC Glass Europe
(86) Numéro de dépôt international: PCT/EP2019/078754
(87) Numéro de publication internationale: WO 2020/083928

(56) Documents cités:
- EP-A1- 3 309 501
- WO-A1-2008/084083
- CA-A1- 3 032 373
- CN-A- 104 924 705
- DE-U1-202010 008 731

## Description

L'invention concerne des vitrages qui simultanément présentent des propriétés de résistance aux impacts de balles, aux explosions ou à l'effraction d'une part, et au feu d'autre part, les deux pouvant intervenir indépendamment, simultanément ou successivement. Dans la suite, pour éviter les répétitions, ces vitrages seront désignés comme résistant aux balles.

En pratique, les produits destinés à la protection contre les impacts sont constitués d'une multiplicité de feuilles destinées à absorber l'énergie des projectiles. Les feuilles sont liées les unes aux autres par un adhésif, qui peut être constitué de feuilles thermoplastiques.

Le plus souvent les vitrages en question sont constitués de feuilles de verre, mais en général, des matériaux qualifiés de verres organiques, car offrant une transparence analogue à celle des verres minéraux, complètent les ensembles et leur confèrent une grande résistance. Ces matériaux rigides à température ambiante sont par exemple des polycarbonates, des poly(méthacrylates de méthyle) ou analogues et sont ordinairement disposés en plaques d'une certaine épaisseur. Les matériaux en question ne constituent pas normalement une manière de fixation des feuilles de verre entre elles. Dans les assemblages feuilletés, leur adhésion aux feuilles de verre requiert l'utilisation de colles spécifiques. L'association de feuilles de verre « minéral » et de feuilles de verre « organique » par ailleurs pose notamment des problèmes liés aux différences de coefficient de dilatation thermique, en particulier lorsque les vitrages sont soumis à des variations importantes telles que celles des vitrages exposés en façade de bâtiments. Ces différences ont tendance à favoriser la délamination de ces assemblages. Ces matériaux, en dehors de leur moindre fragilité à la rupture en comparaison avec les feuilles de verre, présentent la particularité d'une masse volumique bien moindre que celle du verre, mais ce gain de poids a pour contrepartie un coût très supérieur. Des vitrages de ce type sont par exemple décrits dans la publication EP2439066, publication qui qualifie les produits proposés de résistant également au feu. La présence de ces verres organiques en quantité significative n'est cependant pas souhaitable en raison de leur comportement au feu, ceux-ci, en se carbonisant, dégageant des fumées nocives. Des publications analogues sont par exemple WO2018/015066,

DE202010008731U ou DE202010008729U. Par ailleurs les matériaux en question ne présentent pas des propriétés optiques stables dans le temps. Pour beaucoup ils ont tendance à jaunir et leur transparence se modifie.

D'autres publications proposent des vitrages sans ces verres organiques pour éviter les inconvénients indiqués ci-dessus. Pour améliorer le comportement au feu de ces feuilletés « anti-balle », les feuilles de verre sont assemblées au moyen d'adhésifs spécifiques qui, bien qu'organiques, sont ininflammables ou suffisamment résistant au feu. La publication EP2090427 est dans ce sens.

Il est enfin proposé de constituer des vitrages de ce type, qui en plus, offrent une résistance élevée au feu. De façon générale les vitrages offrant une résistance élevée au feu sont constitués par des ensembles d'unités ou modules anti-feu constitués de trois feuilles de verre réunies au moyen de deux couches intumescentes, plusieurs modules (2 ou 3) étant associés au moyen de feuilles thermoplastiques. Ces vitrages, principalement conçus pour leur propriété anti-feu, par la multiplicité des feuilles de verre assemblées offrent accessoirement des propriétés mécaniques qui leur permettent de jouer le rôle de protection anti-balle, ou anti-effraction. Une difficulté pour ce type de vitrages est liée au nombre important de couches intumescentes/anti-feu, qui conduit à « additionner » les défauts optiques potentiellement rencontrés dans chacune des couches intumescentes, conduisant à des taux de rejet importants lors de leur production.

CA3032373A, CN104924705A et WO2008084083A concernent également des vitrages présentant simultanément des propriétés de résistance aux impacts de balles et des propriétés de résistance au feu.

Les inventeurs ont recherché des moyens pour répondre simultanément à des exigences en matière de protection contre le feu pour des vitrages qui sont d'abord destinés à assurer une bonne résistance mécanique, et plus particulièrement une résistance du type anti-balle, et qui ne nécessitent pas la présence en quantité de verres organiques de type polycarbonate ou analogue, et offrant une grande transparence.

Dans le même temps, les inventeurs ont cherché à produire les vitrages en question en utilisant le plus possible des éléments déjà disponibles pour faciliter leur production et en réduire le coût. Les inventeurs ont aussi fait en sorte de proposer des ensembles qui soient utilisables dans les différentes nécessités rencontrées, qu'il s'agisse de vitrages situés à l'intérieur de bâtiments, portes, cloisons, ou situés en façade des bâtiments, notamment des vitrages isolants, tout en s'efforçant de limiter l'épaisseur de ces vitrages et leur poids.

De manière avantageuse et inattendue, les demandeurs viennent maintenant de découvrir qu'il est possible d'atteindre cet objectif par la réalisation d'un vitrage selon la présente invention.

Le présent vitrage de sécurité anti-feu/anti-balle comprend un assemblage feuilleté de feuilles de verre I, le feuilleté I,
- dont les feuilles de verre sont assemblées au moyen de feuilles intercalaires thermoplastiques de type PVB, EVA, PU, ionomères, polymères de cyclo-oléfines, et au moyen de n couches de matériau intumescent à base de silicate alcalin hydraté, avec 1 ≤ n ≤ 3 ,
- comprenant un module anti-feu comprenant lesdites n couches de matériau intumescent à base de silicate alcalin hydraté et n+1 feuilles de verre, ledit module étant flanqué de part et d'autre d'au moins une feuille intercalaire thermoplastique et d'au moins une feuille de verre, et
- ne comprenant pas de feuille de verre organique à base de matériau polymère de type polycarbonate, polyméthacrylate de méthyle, matériau rigide à température ambiante,

le feuilleté I étant éventuellement associé soit à une feuille de verre soit à un second ensemble feuilleté II constitué de feuilles de verre assemblées au moyen de feuilles intercalaires thermoplastiques de type PVB, EVA, PU, ionomères, polymères de cyclo-oléfines, un espace étant maintenu entre le feuilleté I et soit la feuille de verre, soit le feuilleté II,
le vitrage comprenant au moins 6 feuilles de verre.

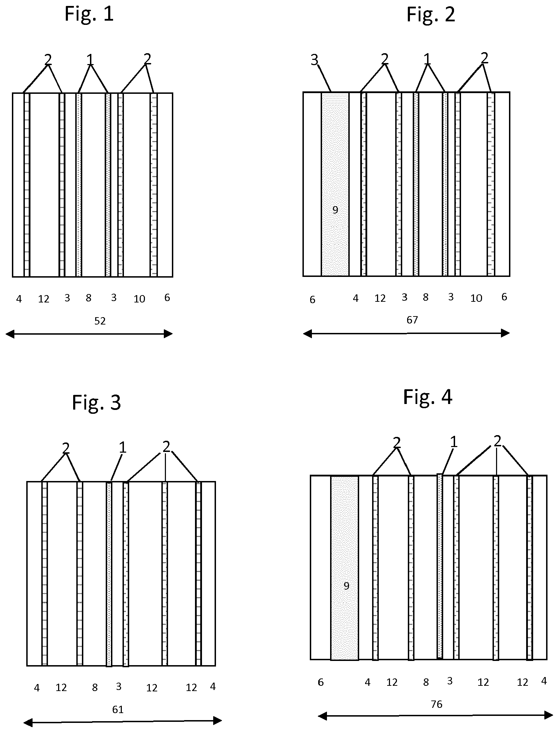

Différents modes de réalisation du présent vitrage sont illustrés par les Figures 1 à 8.

### FIGURES

Figure 1 : un vitrage selon l'invention est composé de 7 feuilles de verre d'épaisseurs de 4, 12, 3, 8, 3, 10 et 6 mm, en partant de la face d'attaque à l'extrême gauche de la Figure 1, avec le module anti-feu comprenant 2 couches intumescentes (1) et 3 feuilles de verre, flanqué, de part et d'autre, de 2 feuilles de verre et de 2 feuilles thermoplastiques (2), pour une épaisseur totale de 52 mm.
Figure 2 : un vitrage selon la Figure 1 est associé à une feuille de verre de 6 mm par le biais d'un espace (3) de 9 mm entre les composants, pour une épaisseur totale de 67 mm; la feuille de verre de 6 mm composant la face d'attaque.
Figure 3 : un vitrage selon l'invention est composé de 7 feuilles de verre d'épaisseurs de 4, 12, 8, 3, 12, 12 et 4 mm, en partant de la face d'attaque à l'extrême gauche de la Figure 3, avec le module anti-feu comprenant 1 couche intumescente (1) et 2 feuilles de verre, flanqué, d'une part (du côté de la face d'attaque) de 2 feuilles de verre et de 2 feuilles thermoplastiques (2), et d'autre part (du côté de la face de protection) de 3 feuilles de verre et de 3 feuilles thermoplastiques, pour une épaisseur totale de 61 mm.
Figure 4 : un vitrage selon la Figure 3 est associé à une feuille de verre de 6 mm par le biais d'un espace (3) de 9 mm entre les composants, pour une épaisseur totale de 76 mm; la feuille de verre de 6 mm composant la face d'attaque.

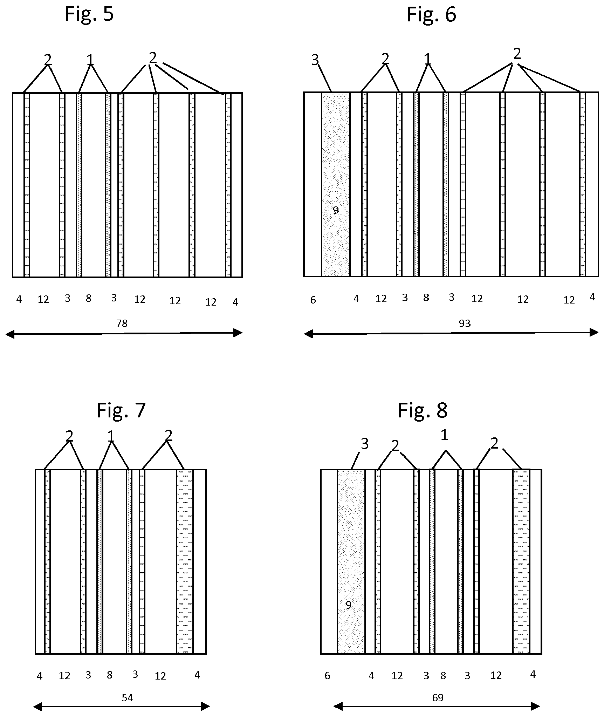

Figure 5 : un vitrage selon l'invention est composé de 9 feuilles de verre d'épaisseurs de 4, 12, 3, 8, 3, 12, 12, 12 et 4 mm, en partant de la face d'attaque à l'extrême gauche de la Figure 5, avec le module anti-feu comprenant 2 couches intumescentes (1) et 3 feuilles de verre, flanqué d'une part (du côté de la face d'attaque) de 2 feuilles de verre et de 2 feuilles thermoplastiques (2) et d'autre part (du côté de la face de protection) de 4 feuilles de verre et de 4 feuilles thermoplastiques, pour une épaisseur totale de 78 mm.
Figure 6 : un vitrage selon la Figure 5 est associé à une feuille de verre de 6 mm par le biais d'un espace (3) de 9 mm entre les composants, pour une épaisseur totale de 93 mm; la feuille de verre de 6 mm composant la face d'attaque.
Figure 7 : un vitrage selon l'invention est composé de 7 feuilles de verre d'épaisseurs de 4, 12, 3, 8, 3, 12 et 4 mm, en partant de la face d'attaque à l'extrême gauche de la Figure 1, avec le module anti-feu comprenant 2 couches intumescentes (1) et 3 feuilles de verre, flanqué de part et d'autre de 2 feuilles de verre et de 2 feuilles thermoplastiques (2), pour une épaisseur totale de 54 mm.
Figure 8 : un vitrage selon la Figure 7 est associé à une feuille de verre de 6 mm par le biais d'un espace (3) de 9 mm entre les composants, pour une épaisseur totale de 69 mm; la feuille de verre de 6 mm composant la face d'attaque.

Le module anti-feu est donc un assemblage ayant une fonction anti-feu comprenant n couches de matériau intumescent à base de silicate alcalin hydraté et n + 1 feuilles de verre, avec 1 ≤ n ≤ 3.

Le feuilleté I est constitué d'un assemblage de feuilles de verre assemblées par des feuilles intercalaires thermoplastiques, au sein duquel est inséré le module anti-feu, par au moins une feuille intercalaire thermoplastique et au moins une feuille de verre de part et d'autre de sa structure. Il s'en suit qu'au moins une feuille de verre et une feuille intercalaire thermoplastique se retrouvent de part et d'autre du module anti-feu, dans le feuilleté I.

Dans le cadre de l'invention dans son entièreté, en l'absence d'une feuille de verre et d'un second ensemble feuilleté II, le vitrage revendiqué est constitué uniquement du feuilleté I, comprenant au moins 6 feuilles de verre.

Les propriétés de résistance aux impacts de balles, aux explosions ou à l'effraction, sont conférées par le vitrage revendiqué, auxquelles s'ajoutent les propriétés de résistance au feu conférées par le module anti-feu intégré au sein du feuilleté I, dans ledit vitrage.

La face d'attaque est ici définie comme la première feuille de verre du côté susceptible de subir un impact; la face de protection est ici définie comme la dernière feuille de verre en partant du côté susceptible de subir un impact, la face de protection est typiquement la première feuille de verre orientée vers le côté protégé du vitrage.

Le présent vitrage est assemblé de sorte que le module anti-feu ne constitue pas la face d'attaque du vitrage anti-balle, susceptible d'être exposée aux impacts. Le présent vitrage est assemblé de sorte que le module anti-feu ne constitue pas non plus la face de protection (face opposée à la face d'attaque). La face d'attaque et la face de protection sont situées de part et d'autre du module anti-feu, séparées de celui-ci par au moins une feuille intercalaire thermoplastique.

Sans vouloir limiter la présente invention à une quelconque théorie, il semblerait que la disposition du module anti-feu au sein du vitrage permette que le module anti-feu dissipe en partie et absorbe en partie l'énergie produite suite à l'impact en face d'attaque au travers du reste du vitrage. En face d'attaque, les feuilles de verre constituant le module anti-feu seraient susceptibles de casse, lors d'un ou plusieurs impacts, ayant pour conséquences néfastes de générer des débris de verre et ainsi de détériorer la fonction anti-balle, et/ou de détériorer la fonction anti-feu. En face de protection, la rigidité, et donc le manque de capacité de déformation, du module anti-feu pourrait nuire à la fonction de protection et d'absorption du choc suite à l'impact.

De par sa disposition au sein du vitrage, et séparé des faces d'attaque et de protection par au moins une feuille intercalaire thermoplastique et au moins une feuille de verre, le module anti-feu est protégé par au moins une première feuille de verre. Dans une situation d'impacts multiples, la face d'attaque, susceptible de casse, maintiendra sa structure grâce à la première feuille intercalaire thermoplastique. Derrière cette face d'attaque et ladite feuille intercalaire thermoplastique, le module anti-feu pourrait lui aussi être endommagé. Dans l'éventualité où la feuille externe du module anti-feu, derrière la au moins première feuille de verre de la face d'attaque, viendrait à se casser, la présence de la première feuille intercalaire thermoplastique l'empêcherait de s'effondrer. Le module anti-feu, quoi qu'endommagé, pourrait dès lors maintenir sa fonction anti-feu et également, de façon avantageuse, participer à la dissipation de l'énergie suite à l'impact, ou à d'autres impacts successifs. Il est ainsi conseillé de placer le module anti-feu au sein du vitrage afin qu'il participe à la dissipation du choc suivant l'impact, et maintienne sa fonction anti-feu.

En pratique, les vitrages selon l'invention ne comportent pas de verres organiques, matériaux rigides, tels que les polycarbonates utilisés antérieurement.

La résistance aux impacts du présent vitrage, résulte essentiellement de l'ensemble de feuilles de verre, lesquelles sont associées les unes aux autres au moyen, d'une part de feuilles thermoplastiques usuelles pour la formation de feuilletés tels les feuilles de PVB, d'EVA, de PU, d'ionomères, de polymères de cyclo-oléfines ou analogues, et d'autre part au moyen d'une ou plusieurs couches de matériau intumescent à base de silicate alcalin hydraté. Cet ensemble est désigné dans la suite comme « feuilleté I ».

Eventuellement pour constituer des vitrages isolants, cet ensemble peut en outre être associé de manière connue à une feuille de verre ou à un autre ensemble feuilleté, désigné « feuilleté II », en ménageant un espace entre ces composants.

Pour des vitrages destinés à protéger contre l'impact de projectiles, l'importance d'épaisseur totale de verre est un facteur prépondérant pour s'opposer à l'énergie cinétique du projectile au point d'impact. Le nombre de feuilles dans l'assemblage est par suite un facteur important. Pour leur part, les feuilles intercalaires favorisent l'absorption des déformations des feuilles de verre successives depuis la face exposée à l'impact.

Selon l'invention, pour satisfaire aux exigences les plus limitées en termes de résistance aux impacts, les vitrages comprennent au moins six feuilles de verre.

De manière préférée, selon les performances demandées, l'épaisseur totale des feuilles de verre du vitrage n'est pas inférieure à 35 mm et de manière particulièrement préférée pas inférieure à 40 mm.

Par ailleurs, de manière préférée, pour jouer pleinement son rôle et notamment pour ajouter une certaine « inertie » à l'ensemble et contribuer à l'absorption mécanique, chaque feuille de verre présente une épaisseur d'au moins 2,5 mm et de préférence d'au moins 3 mm.

La résistance des feuilles aux impacts, ou même au choc thermique, ne progresse pas proportionnellement à leur épaisseur individuelle. La rupture amorcée dans une feuille de verre se propage en fonction des contraintes propres à ces feuilles. A noter que les verres organiques sont beaucoup moins sensibles à la propagation des fissures amorces de ruptures. Globalement, il peut être préférable, à épaisseur globale identique, d'utiliser plusieurs feuilles à la place d'une seule. Pour cette raison, dans les vitrages selon l'invention, les feuilles de verre ont de préférence une épaisseur qui n'est pas supérieure à 16 mm, et de façon préférée pas supérieure à 14 mm.

Dans les vitrages comportant en plus du feuilleté I une feuille de verre, celle-ci présente de préférence une épaisseur de 5 à 16 mm, et comportant un feuilleté II, celui-ci comprend de préférence au plus 6 feuilles de verre d'épaisseur de 3 à 16 mm.

L'espace maintenu entre le feuilleté I et la feuille de verre ou le feuilleté II est de préférence de 6 à 14 mm.

De façon avantageuse, une ou plusieurs feuilles de verre du présent vitrage est/sont renforcées mécaniquement par un traitement thermique ou chimique (trempe, durcissement). Lorsque de telles feuilles sont utilisées, elles sont de préférence disposées sur les faces opposées à celles exposées aux impacts possibles, donc les faces de protection. De telles feuilles ont la particularité de mieux résister à la contrainte de déformation avant, le cas échéant, de se briser en multiples morceaux de petites dimensions. La présence de feuilles traitées de cette façon a pour contrepartie de limiter la possibilité de découpe des vitrages, imposant que ceux-ci soient, d'origine, mis aux dimensions requises.

La résistance croît avec le nombre des feuilles. Néanmoins ce nombre et l'épaisseur des feuilles sont en pratique limités pour des raisons d'encombrement, de poids, et de coût de production du vitrage. Pour ces raisons, le nombre total de feuilles de verre du feuilleté I est de préférence au plus de 12, et de façon particulièrement préférée au plus égal à 10. De même, le nombre total de feuille de verre du vitrage complet, y compris les feuilles séparées du feuilleté I, est de préférence au plus égal à 14. L'épaisseur totale des feuilles de verre de préférence n'est pas supérieure à 150 mm et de façon particulièrement préférée pas supérieure à 110 mm.

Le matériau des feuilles de verre est le plus usuellement un verre de type silico-sodo-calcique pour des raisons de coût, mais il peut aussi s'agir de verre de type alumino-slicate ou encore boro-silicate, verres connus pour présenter un caractère plus réfractaire.

Les verres silico-sodo-calcique peuvent en outre correspondre aux qualités dites « extra-claires », verres dont la teneur en fer est minime et, en conséquence, à faible coloration. Cette propriété est d'autant plus intéressante que l'épaisseur du vitrage a tendance à accentuer la teinte verte. L'usage de verres extra-clairs est néanmoins plus coûteux.

Les vitrages anti-feu les plus performants sont traditionnellement constitués d'un ensemble feuilleté associant des feuilles de verre et, séparant celles-ci, des couches de matériaux qui réagissent lorsqu'exposés à la chaleur, pour former un écran à la fois aux flammes, aux fumées mais aussi au rayonnement thermique. Les matériaux à base de silicates alcalins hydratés, choisis en particulier pour offrir, dans des conditions bien définies, une transparence aux rayons dans le domaine du visible qui les font parfois qualifier de « water glass », contribuent aux propriétés mécaniques de façon limitée. En particulier, ils n'offrent pas de plasticité significative aux vitrages en question.

En pratique, l'ensemble constitué d'une couche intumescente avec les deux feuilles de verre situées de part et d'autre de celle-ci, se comporte mécaniquement dans le vitrage feuilleté à peu près comme si la couche intumescente remplaçait une feuille de verre monolithique d'épaisseur équivalente, voire mieux. A ce titre, cette « feuille » participe évidemment aux propriétés mécaniques recherchées.

D'ailleurs, il a été constaté que, lors d'un test de chute d'une bille d'acier de 0,510 kg et de 5 cm de diamètre, une feuille de verre, de dimensions 30 sur 30 cm et 15 mm d'épaisseur, se brise lorsque la bille tombe d'une hauteur de 1,5 m, tandis qu'un module anti-feu, de dimensions 30 sur 30 cm, composé de 3 feuilles de verres de 3, 8 et 3 mm et 2 couches intumescentes ayant chacune une épaisseur de 1,5 mm, se brise lorsque la bille tombe d'une hauteur de 3,5 m. Le module anti-feu, de par sa structure complète, contribue donc aux propriétés de dissipation d'énergie du vitrage dans son ensemble.

A l'expérience, les inventeurs ont constaté que les ensembles constitués de feuilles de verre assemblées au moyen de feuilles thermoplastiques type PVB, EVA, PU, ionomères ou polymères de cyclo-oléfines, présentent déjà des propriétés de résistance au feu non négligeables. Si le matériau des feuilles thermoplastiques se carbonise à haute température, la multiplicité des feuilles de l'assemblage conduit à une destruction progressive, feuille après feuille de l'ensemble, progression qui ralentit considérablement la destruction complète du vitrage, même en l'absence de couche intumescente.

Pour cette raison, dans des ensembles selon l'invention comportant une multiplicité de feuilles de verre, un module anti-feu comprenant une couche intumescente seule, d'épaisseur usuelle, par exemple de 1,5 à 3 mm, permet le cas échéant de répondre aux conditions de tenue au feu peu exigeantes et satisfaisantes. Les couches en question peuvent aussi présenter des épaisseurs nettement supérieures, allant par exemple jusqu'à 10 mm. La nature du silicate alcalin choisi, et en particulier le rapport molaire SiO₂/M₂O (M étant un alcalin), et la teneur en eau, de façon connue, permettent par ailleurs d'accroître la qualité de résistance au feu.

Néanmoins, selon l'invention, les modules préférés comportent plus d'une couche intumescente d'épaisseur au moins égale aux valeurs indiquées ci-dessus (1,5-3 mm). Les combinaisons les plus usuelles comprennent deux ou trois couches intumescentes, et le plus fréquemment, deux couches. De préférence, ces 2 couches sont situées de part et d'autre d'une même feuille de verre. Cette structure feuille de verre/couche/feuille de verre/couche/feuille de verre, présente au sein du feuilleté I, dans les vitrages préférés selon l'invention, offre l'avantage de maintenir les feuilles après que la première couche intumescente s'est expansée et se détache de la feuille de verre la plus exposée, laquelle s'est déjà brisée, ajoutant au temps de résistance de l'ensemble. Cette structure est par ailleurs celle de vitrages résistant au feu très répandus. L'utilisation de ce qui constitue alors un module anti-feu traditionnel dans le vitrage selon l'invention, est d'autant plus économique.

L'utilisation éventuelle de plus de trois couches intumescentes conduirait à une complexité croissante, engendrant nécessairement des coûts supplémentaires. Limiter de préférence le nombre de couches à une ou deux, en dehors du fait indiqué plus haut que ce nombre de couches intumescentes permet d'atteindre les performances anti-feu les plus utiles pour ces vitrages à double fonction (anti-feu/anti-balle), ce choix réduit le taux de produits rejetés pour défauts. En effet, si les assemblages feuilletés constitués uniquement de feuilles de verre associées au moyen de feuilles thermoplastiques présentent traditionnellement peu de défauts optiques, les couches intumescentes sont connues pour présenter très souvent un voile ou des bulles, ces dernières acceptables seulement dans des limites de dimensions très petites. La multiplication des couches intumescentes accroît nécessairement la quantité totale de défauts et, par suite, le taux de rebut. Ce taux est d'autant plus rédhibitoire que les techniques d'assemblage usuelles (autoclavage notamment) sont susceptibles d'accroître le nombre de ces défauts.

La présence des 1 à 3 couches intumescentes au sein du vitrage, jointe à la multiplicité des feuilles de verre, confère aux vitrages selon l'invention au moins les propriétés anti-feu de base, à savoir celles classées EI 30. Mais les performances peuvent être très supérieures en fonction de la complexité du vitrage constitué, notamment EW60, et/ou EI 60.

Dans les classifications des vitrages, EI désigne ceux qui font obstacle aux flammes et aux fumées et constituent une isolation thermique de conduction; EW désignant ceux qui font obstacle aux flammes et aux fumées et à la transmission de la chaleur par rayonnement. Le nombre indique en minutes le temps de résistance dans les tests réalisés. Les conditions de l'épreuve suivent le protocole des normes EN1363 et EN1364.

La qualité et la production des couches intumescentes à base de silicates alcalins hydratés fait l'objet de multiples publications antérieures. Voir par exemple EP1855878, EP1960317, EP1993828, EP2361223, EP2480041. Les propriétés de résistance au feu des matériaux intumescents conduisent à préférer des produits à fortes caractéristiques réfractaires, même si les caractéristiques mécaniques en sont aussi un peu modifiées. Ces produits sont ceux dont le rapport molaire SiO₂/M₂O, M étant un alcalin, est relativement élevé, par exemple de l'ordre de 3 à 7, et particulièrement de 3,4 à 5,5.

Outre le rapport molaire, la teneur en eau des silicates intervient dans leur comportement au feu. Suivant les techniques de production, la teneur en eau est comprise entre 20% et 45% en poids du matériau. De préférence, on utilise des couches intumescentes « séchées » dans lesquelles la teneur en eau n'est pas supérieure à 30% en poids.

Les couches intumescentes peuvent encore contenir des additifs qui en modifient certaines propriétés. C'est le cas notamment de polyols, éthylène glycol ou glycérine, qui confèrent à ces couches solides une certaine « plasticité ». Ces polyols sont avantageusement en quantité inférieure à 20%, et de préférence inférieure à 17%, en poids du matériau intumescent.

La multiplicité des feuilles de verre (au moins 6) dans le vitrage conduit à la présence nécessaire de feuilles thermoplastiques. Celles-ci sont de préférence au moins au nombre de trois. Le rôle des feuilles thermoplastiques, comme indiqué précédemment, est principalement l'assemblage des feuilles de verre en une structure « feuilletée ». Dans ce rôle, ces feuilles peuvent être relativement peu épaisses. Dans les vitrages traditionnels constitués de feuilletés, les feuilles thermoplastiques présentent une épaisseur supérieure à 0,30 mm. Des épaisseurs usuelles dans le commerce pour les feuilles de PVB sont de 0,38 et 0,76 mm. Ces mêmes feuilles, si nécessaire, peuvent être superposées pour conduire à des épaisseurs bien supérieures. Leur association est facilitée du fait qu'elles peuvent adhérer les unes aux autres, pour former un ensemble compact et homogène.

Le feuilleté I est constitué de sorte à ne pas nécessiter d'espaceur. De fait, le feuilleté I est exempt d'espaceur, et les feuilles constituant ledit feuilleté I sont maintenues solidaires soit par une feuille thermoplastique, soit, pour les feuilles du module anti-feu, par l'intermédiaire d'une couche intumescente.

Les feuilles thermoplastiques de PVB, d'EVA, de PU, de ionomères, ou de polymères de cyclo-oléfines, contrairement aux verres organiques constitués de plastiques rigides, polycarbonates, polyméthacrylates ou analogues, conservent une certaine plasticité à température ambiante. Elles ne sont pas « cassantes ». Cette particularité ajoute à la résistance aux impacts, en absorbant une partie de l'énergie correspondante. Leur présence dans les feuilletés des vitrages selon l'invention reste néanmoins essentiellement liée à leur rôle d'adhésif.

Dans certaines circonstances, la présence d'au moins une feuille thermoplastique sur chaque feuille de verre externe du module anti-feu procure avantageusement une protection UV de part et d'autre du module anti-feu.

Pour les raisons indiquées précédemment, la présence de matériaux organiques, sensibles aux températures correspondant à une exposition au feu, ne contribue pas aux propriétés anti-feu des vitrages selon l'invention. Il est donc préférable de faire en sorte que la quantité de ces matériaux reste limitée. Pour cette raison, les feuilles de faible épaisseur sont les plus usuelles, et la masse globale de matériau organique ne constitue pas plus du 1/10 de la masse du vitrage, et de préférence pas plus de 1/20.

Selon les conditions d'utilisation, il est possible d'inclure dans le vitrage une ou plusieurs feuilles thermoplastiques d'épaisseur allant jusqu'à 5 mm. Cependant dans ces structures, la ou les feuilles de matériau thermoplastique épaisses sont disposées dans la structure de préférence de telle sorte qu'elles ne soient pas à proximité immédiate de la face du vitrage susceptible d'être exposée au feu. De préférence, la feuille épaisse est séparée de cette face par au moins deux feuilles de verre.

Dans certaines circonstances, le module anti-feu peut se révéler un atout pour le rendu esthétique du vitrage de par sa composition possible en verre extra-clair, fournissant les mêmes propriétés mécaniques ou meilleures, qu'une feuille de verre plus épaisse (par exemple 15 à 18 mm), avec, en outre, un aspect moins verdâtre.

Selon les premier et second modes alternatifs de l'invention suivants, le module anti-feu peut être flanqué d'une part d'au moins une feuille intercalaire thermoplastique et d'au moins une feuille de verre, et d'autre part d'au moins 2 feuilles intercalaires thermoplastiques et d'au moins 2 feuilles de verre.

Selon le premier mode alternatif de réalisation de l'invention, un vitrage de sécurité anti-feu/anti-balle peut comprendre un assemblage feuilleté de feuilles de verre I, le feuilleté I,
- dont les feuilles de verre sont assemblées au moyen de feuilles intercalaires thermoplastiques de type PVB, EVA, PU, ionomères, polymères de cyclo-oléfines, et au moyen de n couches de matériau intumescent à base de silicate alcalin hydraté, avec 1 ≤ n ≤3,
- comprenant un module anti-feu comprenant lesdites n couches de matériau intumescent à base de silicate alcalin hydraté et n+1 feuilles de verre, ledit module étant flanqué, indépendamment du côté considéré d'attaque ou de protection, d'une part d'au moins une feuille intercalaire thermoplastique et d'au moins une feuille de verre, et d'autre part d'au moins 2 feuilles intercalaires thermoplastiques et d'au moins 2 feuilles de verre, et
- ne comprenant pas de feuille de verre organique à base de matériau polymère de type polycarbonate, poly(méthacrylate de méthyle), matériau rigide à température ambiante;

le feuilleté I étant éventuellement associé soit à une feuille de verre, soit à un second ensemble feuilleté II constitué de feuilles de verre assemblées au moyen de feuilles intercalaires thermoplastiques de type PVB, EVA, PU, ionomères, polymères de cyclo-oléfines, un espace étant maintenu entre le feuilleté I et soit la feuille de verre, soit le feuilleté II,
le vitrage comprenant au moins 6 feuilles de verre.

Selon ce premier mode alternatif, la dissymétrie peut être indépendante du côté considéré, donc côté face d'attaque ou face de protection.

Selon le second mode alternatif de réalisation de l'invention, un vitrage de sécurité anti-feu/anti-balle peut comprendre un assemblage feuilleté de feuilles de verre I, le feuilleté I,
- dont les feuilles de verre sont assemblées au moyen de feuilles intercalaires thermoplastiques de type PVB, EVA, PU, ionomères, polymères de cyclo-oléfines, et au moyen de n couches de matériau intumescent à base de silicate alcalin hydraté, avec 1 ≤ n ≤3,
- comprenant un module anti-feu comprenant lesdites n couches de matériau intumescent à base de silicate alcalin hydraté et n+1 feuilles de verre, ledit module étant flanqué, du côté de la face d'attaque, d'au moins une feuille intercalaire thermoplastique et d'au moins une feuille de verre, et du côté de la face de protection d'au moins 2 feuilles intercalaires thermoplastiques et d'au moins 2 feuilles de verre, et
- ne comprenant pas de feuille de verre organique à base de matériau polymère de type polycarbonate, poly(méthacrylate de méthyle), matériau rigide à température ambiante;

le feuilleté I étant éventuellement associé soit à une feuille de verre, soit à un second ensemble feuilleté II constitué de feuilles de verre assemblées au moyen de feuilles intercalaires thermoplastiques de type PVB, EVA, PU, ionomères, polymères de cyclo-oléfines, un espace étant maintenu entre le feuilleté I et soit la feuille de verre, soit le feuilleté II,
le vitrage comprenant au moins 6 feuilles de verre.

Selon ce second mode alternatif, en cas de dissymétrie dans le nombre de feuilles de verre et de feuilles intercalaires de chaque côté du module anti-feu, il est recommandé de faire en sorte que le module anti-feu soit plus près de la face d'attaque que de la face de protection, donc plus distant de ladite face de protection. Dans cette configuration, le module anti-feu pourra pleinement contribuer à la dissipation de l'énergie d'impact au travers du reste du vitrage, vers la face de protection, et maintenir sa fonction anti-feu.

Par exemple, selon le premier mode de réalisation de l'invention, on peut citer, de façon non-exhaustive, les structures suivantes de feuilleté I, (où V = feuille de verre ; T = feuille intercalaire thermoplastique et I = couche intumescente),
- à au moins 6 feuilles de verre et une couche intumescente:
   ∘ V-T-V-T-V-**I**-V-T-V-T-V
   ∘ V-T-V-**I**-V-T-V-T-V-T-V
   ∘ V-T-V-T-V-T-V-**I**-V-T-V
- à au moins 6 feuilles de verre et 2 couches intumescentes:
   ∘ V-T-V-**I**-V-**I**-V-T-V-T-V
   ∘ V-T-V-T-V-**I**-V-**I**-V-T-V
- à au moins 6 feuilles de verre et 3 couches intumescentes:
   ∘ V-T-V-**I**-V-**I**-V-**I**-V-T-V
- à au moins 7 feuilles de verre et 2 couches intumescentes:
   ∘ V-T-V-T-V-**I**-V-**I**-V-T-V-T-V
   ∘ V-T-V-**I**-V-**I**-V-T-V-T-V-T-V
   ∘ V-T-V-T-V-T-V-**I**-V-**I**-V-T-V
- à au moins 8 feuilles de verre et 3 couches intumescentes:
   ∘ V-T-V-**I**-V-**I**-V-**I**-V-T-V-T-V-T-V
   ∘ V-T-V-T-V-**I**-V-**I**-V-**I**-V-T-V-T-V
   ∘ V-T-V-T-V-T-V-**I**-V-**I**-V-**I**-V-T-V.

Des structures selon le second mode alternatif de réalisation de la présente invention incluent, entre autres, les structures suivantes :
- à au moins 6 feuilles de verre et une couche intumescente:
   ∘ V-T-V-**I**-V-T-V-T-V-T-V
- à au moins 6 feuilles de verre et 2 couches intumescentes:
   ∘ V-T-V-**I**-V-**I**-V-T-V-T-V
- à au moins 7 feuilles de verre et 2 couches intumescentes:
   ∘ V-T-V-**I**-V-**I**-V-T-V-T-V-T-V
- à au moins 8 feuilles de verre et 3 couches intumescentes:
   ∘ V-T-V-**I**-V-**I**-V-**I**-V-T-V-T-V-T-V.

D'autres feuilles de verre et feuilles de thermoplastiques peuvent être ajoutées de part et/ou d'autre des structures décrites plus haut, en fonction de la protection attendue, sans déroger au principe de la présente invention décrit plus haut.

Une feuille de verre, ou un second ensemble feuilleté II constitué de feuilles de verre assemblées au moyen de feuilles intercalaires thermoplastiques de type PVB, EVA, PU, ionomères, polymères de cyclo-oléfines, peut être ajouté(e) de l'une ou l'autre part des structures de feuilleté I décrites plus haut, un espace étant maintenu entre le feuilleté I et soit la feuille de verre, soit le feuilleté II. Par exemple,
∘ V-espace-V-T-V-**I**-V-**I**-V-T-V-T-V
∘ V-espace-V-T-V-**I**-V-**I**-V-T-V-T-V-T-V
∘ V-espace-V-T-V-**I**-V-**I**-V-**I**-V-T-V-T-V-T-V
   ou
∘ V-T-V-**I**-V-**I**-V-T-V-T-V-T-V-espace-V
∘ V-T-V-T-V-**I**-V-**I**-V-**I**-V-T-V-T-V-espace-V,
   ou
∘ II-espace-V-T-V-**I**-V-**I**-V-T-V-T-V-T-V
∘ II-espace-V-T-V-T-V-**I**-V-**I**-V-**I**-V-T-V-T-V,
   ou
∘ V-T-V-**I**-V-**I**-V-T-V-T-V-espace-II
∘ V-T-V-**I**-V-**I**-V-T-V-T-V-T-V-espace-II
∘ V-T-V-**I**-V-**I**-V-**I**-V-T-V-T-V-T-V-espace-II,
ou toute autre combinaison possible selon la présente invention.

Dans la suite, l'invention est illustrée par plusieurs exemples.

### EXEMPLES

Exemples 1 à 18 : Les structures des vitrages sont indiquées de la manière suivante. Les feuilles de verre figurent par le nombre correspondant à leur épaisseur en millimètres. Les couches intumescentes de silicate de sodium hydraté ont une épaisseur constante de 2 mm et sont représentées par « / ». Les feuilles intercalaires sont de PVB et présentent chacune une épaisseur de 0,76 mm. Elles sont représentées chacune par « : ». Lorsque plusieurs feuilles intercalaires sont superposées il y a autant de « : » que de feuilles. La configuration est décrite de sorte que la face d'attaque soit la première feuille à l'extrême gauche du vitrage, et que l'impact se propage dans le vitrage, dans le sens de la lecture du descriptif (de gauche à droite).

Le tableau fournit également l'épaisseur totale du vitrage en millimètres et son poids par unité de surface de 1m². Le rapport de masse de PVB au poids total du vitrage est aussi indiqué.

La qualité « anti-balle » des vitrages - BR (bullet resistance) - est évaluée selon la norme EN 1063. La cote BR est donnée pour une arme et un projectile donnés, selon l'absence de trou perforant dans la structure après impact sur la face d'attaque. La notation NS (no splinters) correspond à une qualité anti-éclat, et indique un verre de protection anti-balles "sans éclats" du côté opposé lors de l'impact d'un projectile. L'impact du projectile n'est pas suivi de la projection d'éclat de verre depuis la face de protection, opposée à celle recevant cet impact. La notation S (splinters) indique un verre de protection anti-balles "avec éclats" de verre du côté opposé de l'impact d'un projectile. L'impact du projectile est suivi de la projection d'éclat de verre depuis la face de protection, opposée à celle recevant ledit impact. La qualité « anti-balle » des vitrages pour les exemples de l'invention 1 à 12, 17 et 18 est de type BR NS, tandis que la qualité des exemples 13 à 16 est de type S.

Chaque assemblage de vitrage proposé comporte deux modes:
- l'un destiné à un usage intérieur qui ne comporte que le bloc feuilleté I,
- un pour l'usage extérieur formant isolation par addition d'une feuille de verre II d'une épaisseur de 6 mm distante de 9 mm du bloc feuilleté I.

| | **Structure** | **anti effraction EN 356** | **anti Feu EN 1364** | **anti-balle EN 1063** | **épaisseur mm** | **poids kg/m²** | **PVB/total wt%** |
|---|---|---|---|---|---|---|---|
| 1 | 4:12:3/8/3:10:6 | P7B | EI 30 | BR5 NS | 52 | 124 | 3,7% |
| 2 | 6 - air9 - 4:12:3/8/3:10:6 | P7B | EI 30 | BR5 NS | 67 | 139 | 3,3% |
| 3 | 4:12:3/8/3:12:12:4 | P7B | EI 30 | BR5 NS | 65 | 155 | 3,7% |
| 4 | 6 - air9 - 4:12:3/8/3:12:12:4 | P7B | EI 30 | BR5 NS | 80 | 170 | 3,3% |
| 5 | 4:12:3/8/3:10:10:4 | P7B | EI 30 | BR5 NS | 61 | 145 | 3,9% |
| 6 | 6 - air9 - 4:12:3/8/3:10:10:4 | P7B | EI 30 | BR5 NS | 76 | 160 | 3,6% |
| 7 | 4:12:8/3:12:12:4 | P7B | EI 30 | BR5 NS | 61 | 145 | 3,9% |
| 8 | 6 - air9 - 4:12:8/3:12:12:4 | P7B | EI 30 | BR5 NS | 76 | 160 | 3,6% |
| 9 | 4:12:3/8/3:12:12:12:4 | P8B | EI 30 | BR6 NS | 78 | 186 | 3,7% |
| 10 | 6 - air9 - 4:12:3/8/3:12:12:12:4 | P8B | EI 30 | BR6 NS | 93 | 201 | 3,4% |
| 11 | 4:12:3/8/3:12:12:10:4 | P8B | EI 30 | BR6 NS | 76 | 150 | 3,0% |
| 12 | 6 - air9 - 4:12:3/8/3:12:12:10:4 | P8B | EI 30 | BR6 NS | 91 | 165 | 2,8% |
| 13 | 12:3/8/3:4:::::4 | P7B | EI 30 | BR5 S | 42 | 97 | 8,2% |
| 14 | 6 - air9 - 12:3/8/3:4:::::4 | P7B | EI 30 | BR5 S | 57 | 112 | 7,1% |
| 15 | 4:12:3/8/3:12::::4 | P7B | EI 30 | BR6 S | 54 | 126 | 5,4% |
| 16 | 6 - air9 - 4:12:3/8/3:12::::4 | P7B | EI 30 | BR6 S | 69 | 141 | 4,8% |
| 17 | 4:8/3 :12 :12 :12 :4 | P7B | EI 30 | BR5 NS | 61 | 145 | 3,9% |
| 18 | 6 - air9 - 4:8/3 :12 :12 :12 :4 | P7B | EI 30 | BR5 NS | 76 | 160 | 3,6% |

Les figures jointes représentent de manière schématique (sans respecter les proportions des différentes dimensions) les exemples 1, 2, 7, 8, 9, 10, 15, 16 du tableau précédent.

Comme décrit plus haut, les figures montrent la composition des différents composants des vitrages. Les épaisseurs des feuilles de verre sont indiquées en regard de celles-ci. L'espace entre le feuilleté I et la feuille de verre ou le feuilleté II est inscrit dans cet espace lequel est de façon connue rempli d'air ou de gaz inerte tel que l'argon. Les dimensions sont toutes exprimées en millimètres.

Seules les couches intumescentes 1, les feuilles thermoplastiques 2 et les espaces 3 sont référencés. Les feuilles de verre ne le sont pas en dehors de l'indication de leur épaisseur. Sur ces figures, l'épaisseur totale du vitrage est aussi indiquée sous la figure correspondante, en mm.

Chaque figure impaire correspond à un vitrage ne comportant que le bloc feuilleté I. Dans les figures paires, une feuille supplémentaire est ajoutée pour constituer un « double » vitrage isolant.

Les figures 7 et 8 (exemples 15 et 16) comportent une seule couche intumescente tandis que toutes les autres ont deux couches intumescentes. Les performances de résistance au feu pour une seule couche restent néanmoins satisfaisantes, la structure globale du feuilleté contribuant à ces performances.

Les figures 7 et 8 (exemples 15 et 16 du tableau) comportent un assemblage de 4 feuilles thermoplastiques.

Le nombre de feuilles de verre varie dans ces figures de 7 pour les figures 1, 3 et 7 (exemples 1, 7, 15) à 10 pour la figure 6 (exemple 10). De la même façon, les exemples montrent une grande diversité d'épaisseur totale des feuilles de verre, comme celles du vitrage complet. Ainsi l'épaisseur des vitrages varie de 52 mm pour la figure 1 (exemple 1) à 93 mm pour la figure 6 (exemple 10).

Les vitrages selon l'invention comportent donc le module anti-feu composé de 1 à 3 couche(s) intumescente(s), inséré au sein d'un vitrage anti-balle, et flanqué de part et d'autre d'au moins une feuille intercalaire thermoplastique et d'au moins une feuille de verre. Dans cette configuration, la face d'attaque et la face de protection sont disposées de part et d'autre dudit module anti-feu, chacune séparée de celui-ci par au moins une feuille de thermoplastique.

Dans les configurations possibles du vitrage selon l'invention, le module anti-feu peut ainsi être flanqué de part et d'autre d'au moins 2 feuilles de verre et 2 feuilles de thermoplastique. Selon d'autres configurations possibles, le module anti-feu peut ainsi être flanqué, indépendamment du côté considéré d'attaque ou de protection, d'une part d'au moins 2 feuilles de verre et 2 feuilles de thermoplastique, et d'autre part d'au moins 3 feuilles de verre et 3 feuilles de thermoplastique.

De par sa disposition au sein du module anti-balle, le module anti-feu n'est pas susceptible d'être endommagé par un impact, et n'est ainsi pas susceptible de se briser et de perdre sa fonction anti-feu. Cette disposition au sein du module anti-balle permet également que le module anti-feu dissipe l'énergie produite suite à l'impact sur la face d'attaque.

## Revendications

1. Vitrage de sécurité anti-feu/anti-balle comprenant un assemblage feuilleté de feuilles de verre I, le feuilleté I,
- dont les feuilles de verre sont assemblées au moyen de feuilles intercalaires thermoplastiques de type PVB, EVA, PU, ionomères, polymères de cyclo-oléfines, et au moyen de n couches de matériau intumescent à base de silicate alcalin hydraté, avec 1 ≤ n ≤3 ;
- comprenant un module anti-feu comprenant lesdites n couches de matériau intumescent à base de silicate alcalin hydraté et n+1 feuilles de verre, ledit module étant flanqué de part et d'autre d'au moins une feuille intercalaire thermoplastique et d'au moins une feuille de verre, et
- ne comprenant pas de feuille de verre organique à base de matériau polymère de type polycarbonate, poly(méthacrylate de méthyle), matériau rigide à température ambiante;
le feuilleté I étant éventuellement associé soit à une feuille de verre, soit à un second ensemble feuilleté II constitué de feuilles de verre assemblées au moyen de feuilles intercalaires thermoplastiques de type PVB, EVA, PU, ionomères, polymères de cyclo-oléfines, un espace étant maintenu entre le feuilleté I et soit la feuille de verre, soit le feuilleté II,
le vitrage comprenant au moins 6 feuilles de verre.

2. Vitrage selon la revendication 1 dans lequel le module anti-feu est flanqué d'une part d'au moins une feuille intercalaire thermoplastique et d'au moins une feuille de verre, et d'autre part d'au moins 2 feuilles intercalaires thermoplastiques et d'au moins 2 feuilles de verre.

3. Vitrage selon l'une des revendications précédentes dans lequel l'épaisseur totale des feuilles de verre n'est pas inférieure à 35 mm et de préférence pas inférieure à 40 mm et/ou n'est pas supérieure à 150 mm et de préférence pas supérieure à 110 mm.

4. Vitrage selon l'une des revendications précédentes dans lequel chacune des au moins 6 feuilles de verre présente une épaisseur d'au moins 2,5 mm, et de préférence d'au moins 3 mm et d'au plus 16 mm.

5. Vitrage selon l'une des revendications précédentes dans lequel le feuilleté I comporte deux couches intumescentes situées de part et d'autre d'une même feuille de verre.

6. Vitrage selon l'une des revendications précédentes dans lequel le feuilleté I comprend au moins 3 feuilles intercalaires thermoplastiques, ces feuilles distinctes les unes des autres.

7. Vitrage selon la revendication 6 dans lequel chacune des feuilles thermoplastiques présente une épaisseur d'au moins 0,30 mm.

8. Vitrage selon la revendication 6 dans lequel le feuilleté I comprend au plus 7 feuilles intercalaires thermoplastiques.

9. Vitrage selon l'une des revendications précédentes dans lequel les feuilles intercalaires, éventuellement à l'exception au plus de 2 d'entre elles, présentent une épaisseur d'au plus 3 mm.

10. Vitrage selon la revendication 9 comprenant une ou deux feuilles intercalaires chacune d'épaisseur supérieure à 3 mm et inférieure à 8 mm, et de préférence inférieure à 6 mm.

11. Vitrage selon l'une des revendications précédentes dans lequel la masse de l'ensemble des feuilles intercalaires est au plus 1/10 de la masse du vitrage, et de préférence au plus 1/20.

12. Vitrage selon l'une des revendications précédentes comportant une ou plusieurs feuilles de verre traitée thermiquement ou chimiquement.

13. Vitrage selon la revendication 12 dans lequel la ou les feuilles de verre traitées sont disposées sur la face du vitrage non exposée à l'impact.

14. Vitrage selon la revendication 1 ou 2, dans lequel le feuilleté I est associé avec une feuille de verre ou un feuilleté II, l'espace maintenu entre la feuille de verre ou le feuilleté II étant de 6 à 14 mm.

15. Vitrage selon la revendication 14 dans lequel le feuilleté I est associé
- à une feuille de verre dont l'épaisseur est de 5 à 16 mm, ou
- à un feuilleté II comprenant au plus 6 feuilles de verre chacune d'épaisseur comprise entre 3 et 16 mm.

## Patentansprüche

1. Brandschutz-/beschusssichere Sicherheitsverglasung, die eine laminierte Anordnung von Glasscheiben I, das Laminat I, umfasst,
- dessen Glasscheiben durch thermoplastische Zwischenschichten vom Typ PVB, EVA, PU, Ionomere, Cycloolefin-Polymere und durch n Schichten eines aufschäumenden Materials auf der Basis eines hydratisierten Alkalisilikats verbunden sind, wobei 1 ≤ n ≤ 3;
- das ein Brandschutzmodul umfasst, das die n Schichten aus einem aufschäumenden Material auf der Basis eines hydratisierten Alkalisilikats und n+1 Glasscheiben umfasst, wobei das Modul auf beiden Seiten von mindestens einer thermoplastischen Zwischenschicht und mindestens einer Glasscheibe flankiert wird, und
- das keine Scheibe aus organischem Glas auf der Basis eines polymeren Materials vom Polycarbonat-, Poly(methylmethacrylat)-Typ umfasst, wobei das Material bei Umgebungstemperatur starr ist;
wobei das Laminat I gegebenenfalls entweder mit einer Glasscheibe oder einer zweiten laminierten Einheit II verbunden ist, die aus Glasscheiben besteht, die durch thermoplastische Zwischenschichten vom Typ PVB, EVA, PU, Ionomere, Cycloolefin-Polymere verbunden sind, wobei ein Raum zwischen dem Laminat I und entweder der Glasscheibe oder dem Laminat II gehalten wird,
wobei die Verglasung mindestens 6 Glasscheiben umfasst.

2. Verglasung nach Anspruch 1, wobei das Brandschutzmodul auf der einen Seite von mindestens einer thermoplastischen Zwischenschicht und mindestens einer Glasscheibe und auf der anderen Seite von mindestens 2 thermoplastischen Zwischenschichten und mindestens 2 Glasscheiben flankiert wird.

3. Verglasung nach einem der vorhergehenden Ansprüche, wobei die Gesamtdicke der Glasscheiben nicht weniger als 35 mm und vorzugsweise nicht weniger als 40 mm und/oder nicht mehr als 150 mm und vorzugsweise nicht mehr als 110 mm beträgt.

4. Verglasung nach einem der vorhergehenden Ansprüche, wobei jede der mindestens 6 Glasscheiben eine Dicke von mindestens 2,5 mm und vorzugsweise mindestens 3 mm und höchstens 16 mm aufweist.

5. Verglasung nach einem der vorhergehenden Ansprüche, wobei das Laminat I zwei aufschäumende Schichten umfasst, die auf beiden Seiten ein und derselben Glasscheibe angeordnet sind.

6. Verglasung nach einem der vorhergehenden Ansprüche, wobei das Laminat I mindestens 3 thermoplastische Zwischenschichten umfasst, wobei diese Schichten voneinander verschieden sind.

7. Verglasung nach Anspruch 6, wobei jede der thermoplastischen Schichten eine Dicke von mindestens 0,30 mm aufweist.

8. Verglasung nach Anspruch 6, wobei das Laminat I höchstens 7 thermoplastische Zwischenschichten umfasst.

9. Verglasung nach einem der vorhergehenden Ansprüche, wobei die Zwischenschichten gegebenenfalls mit Ausnahme von höchstens 2 davon eine Dicke von höchstens 3 mm aufweisen.

10. Verglasung nach Anspruch 9, die eine oder zwei Zwischenschichten umfasst, die jeweils eine Dicke von mehr als 3 mm und weniger als 8 mm und vorzugsweise weniger als 6 mm aufweisen.

11. Verglasung nach einem der vorhergehenden Ansprüche, wobei die Masse der Gesamtheit der Zwischenschichten höchstens 1/10 der Masse der Verglasung und vorzugsweise höchstens 1/20 beträgt.

12. Verglasung nach einem der vorhergehenden Ansprüche, die eine oder mehrere thermisch oder chemisch behandelte Glasscheiben umfasst.

13. Verglasung nach Anspruch 12, wobei die behandelte Glasscheibe oder die behandelten Glasscheiben auf der Seite der Verglasung angeordnet ist bzw. sind, die dem Aufprall nicht ausgesetzt ist.

14. Verglasung nach Anspruch 1 oder 2, wobei das Laminat I mit einer Glasscheibe oder einem Laminat II verbunden ist, wobei der zwischen der Glasscheibe oder dem Laminat II beibehaltene Raum 6 bis 14 mm beträgt.

15. Verglasung nach Anspruch 14, wobei das Laminat I mit Folgendem verbunden ist:
- einer Glasscheibe, deren Dicke 5 bis 16 mm beträgt, oder
- einem Laminat II, das höchstens 6 Glasscheiben umfasst, die jeweils eine Dicke zwischen 3 und 16 mm aufweisen.

## Claims

1. Fireproof/bulletproof safety glazing comprising a laminated assembly of glass sheets I, the laminate I,
- the glass sheets of which are assembled by means of thermoplastic interlayer sheets made of thermoplastics such as PVB, EVA, PU, ionomers, cycloolefin polymers, and by means of n layers of intumescent material based on hydrated alkali metal silicate, where 1 ≤ n ≤3;
- comprising a fireproof module comprising said n layers of intumescent material based on hydrated alkali metal silicate and n+1 glass sheets, said module being flanked on either side by at least one thermoplastic interlayer sheet and at least one glass sheet, and
- not comprising an organic glass sheet based on polymer material such as polycarbonate, poly(methyl methacrylate), material rigid at ambient temperature;
the laminate I optionally being associated either with a glass sheet or with a second laminated assembly II made up of glass sheets assembled by means of thermoplastic interlayer sheets made of thermoplastics such as PVB, EVA, PU, ionomers, cycloolefin polymers, a space being maintained between the laminate I and either the glass sheet or the laminate II,
the glazing comprising at least 6 glass sheets.

2. Glazing according to Claim 1, wherein the fireproof module is flanked on one side by at least one thermoplastic interlayer sheet and at least one glass sheet and on the other side by at least 2 thermoplastic interlayer sheets and at least 2 glass sheets.

3. Glazing according to either of the preceding claims, wherein the total thickness of the glass sheets is not less than 35 mm and preferably not less than 40 mm and/or is not greater than 150 mm and preferably not greater than 110 mm.

4. Glazing according to one of the preceding claims, wherein each of the at least 6 glass sheets has a thickness of at least 2.5 mm, and preferably at least 3 mm and at most 16 mm.

5. Glazing according to one of the preceding claims, wherein the laminate I has two intumescent layers situated on either side of one and the same glass sheet.

6. Glazing according to one of the preceding claims, wherein the laminate I comprises at least 3 thermoplastic interlayer sheets, these sheets being separate from one another.

7. Glazing according to claim 6, wherein each of the thermoplastic sheets has a thickness of at least 0.30 mm.

8. Glazing according to Claim 6, wherein the laminate I comprises at most 7 thermoplastic interlayer sheets.

9. Glazing according to one of the preceding claims, wherein the interlayer sheets, possibly apart from at most 2 thereof, have a thickness of at most 3 mm.

10. Glazing according to Claim 9, comprising one or two interlayer sheets, each having a thickness greater than 3 mm and less than 8 mm, and preferably less than 6 mm.

11. Glazing according to one of the preceding claims, wherein the mass of the assembly of interlayer sheets is at most 1/10 of the mass of the glazing, and preferably at most 1/20.

12. Glazing according to one of the preceding claims, having one or more thermally or chemically treated glass sheets.

13. Glazing according to Claim 12, wherein the treated glass sheet(s) is/are disposed on the face of the glazing that is not exposed to an impact.

14. Glazing according to Claim 1 or 2, wherein the laminate I is associated with a glass sheet or a laminate II, the space maintained between the glass sheet or the laminate II being from 6 to 14 mm.

15. Glazing according to Claim 14, wherein the laminate I is associated
- with a glass sheet having a thickness of from 5 to 16 mm, or
- with a laminate II comprising at most 6 glass sheets, each having a thickness of between 3 and 16 mm.
